# FASCICULE DE BREVET EUROPEEN

(11) **EP 3 426 734 B1**
(45) Date de publication et mention de la délivrance du brevet: **29.04.2020**
(21) Numéro de dépôt: 17713732.0
(22) Date de dépôt: 07.03.2017
(51) Int. Cl.: C09D 10/00

(54) **FLUIDE DE CORRECTION**
KORREKTURFLÜSSIGKEIT
CORRECTION FLUID

(30) Priorité: 07.03.2016 FR 1651863
(43) Date de publication de la demande: 16.01.2019
(73) Titulaire: Société BIC, 92110 Clichy (FR)
(72) Inventeur: BETHOUART, Carine, 62152 Neufchatel-Hardelot (FR)
(74) Mandataire: Cabinet Beau de Loménie
(86) Numéro de dépôt international: PCT/FR2017/050502
(87) Numéro de publication internationale: WO 2017/153674

(56) Documents cités:
- JP-A- H07 166 114
- JP-A- 2008 115 205
- US-A- 5 290 839
- US-A- 5 338 348
- US-A1- 2014 249 256

## Description

La présente invention concerne les fluides de correction à base de solvant organique.

Les fluides de correction sont des produits fluides blancs et opaques destinés à corriger les marques faites par un instrument d'écriture, en particulier un stylo. De tels fluides sont ainsi appliqués sur la marque présente sur un papier et lorsqu'ils sèchent, fournissent un film qui couvre la marque erronée. Une marque de correction peut alors être appliquée sur le film sec. Actuellement sur le marché, on trouve des fluides à séchage physique (évaporation de solvants), qui sont de deux types :
- à base de solvant organique : sèchent rapidement mais libèrent
   des COV.
- à base aqueuse : non nocifs mais sèchent lentement, avec en général un temps de séchage > 60s.
Un autre système de correcteur existant est celui-du dérouleur, mais la formule est alors une formule sèche, et, bien que le séchage soit très rapide et ne libère pas de COV, la technologie est complètement différente.
La formulation d'un fluide de correction est proche de celle d'une peinture mais sa viscosité est basse (de façon à avoir un bon étalement : elle est en générale comprise entre 50 et 100 cPs lorsqu'elle est mesurée avec un rhéomètre Anton Paar modèle MCR 301 à un taux de cisaillement de 100 s⁻¹ et une température de mesure de 10°C) et le % de pigment blanc est élevé (de façon à avoir un excellent pouvoir couvrant avec une seule application de film : le % classique de pigment blanc dans les fluides de correction est de l'ordre de 40% en poids par rapport au poids total du fluide de correction et il est de manière générale, toujours supérieur à 37% en poids par rapport au poids total du fluide de correction). Ces 2 paramètres (basse viscosité et forte teneur en pigment blanc) représentent un handicap pour garder une bonne stabilité de conservation du fluide et en particulier une bonne réhomogénéisation du fluide lors de l'utilisation par les consommateurs.
Les problèmes de réhomogénéisation ont tendance à augmenter lors du vieillissement du fluide de correction. Ainsi, un fluide de correction facilement et rapidement réhomogénéisable voit au cours de sa durée de conservation une diminution de cette facilité et de cette vitesse de réhomogénéisation ce qui peut poser un problème au consommateur. En effet, les consommateurs doivent secouer les produits avant utilisation de façon à obtenir un fluide homogène. Si les consommateurs ne secouent pas de façon suffisante le produit par exemple car le fluide ne se réhomogénéise pas suffisamment facilement et/ou rapidement, le fluide lors de son utilisation n'est pas homogène et peut bloquer la sortie de son instrument d'application. En particulier des fluides ayant des problèmes de réhomogénéisation ne peuvent pas être conditionnés dans des stylos pour fluide de correction qui ont un point de sortie plus petits que les flacons avec applicateurs type pinceaux. En outre l'application du fluide de correction n'est alors pas uniforme, quel que soit le dispositif d'application (le film est soit trop épais et sèche mal, soit trop fin et laisse apparaitre la marque sous-jacente).

Pour améliorer la dispersion du pigment blanc, en général l'oxyde de titane, dans le solvant du fluide de correction, et donc sa capacité de réhomogénéisation, des agents dispersants sont ajoutés dans les formulations de fluide de correction.
Ainsi la demande JP06-122845 décrit l'utilisation de sels partiels d'acide carboxylique polyamine, et en particulier dans ses exemples du DISPERBYK-130® commercialisé par la société BYK (solution de polyamine amides d'acides polycarboxyliques insaturés obtenue par réaction entre un trimère d'acide gras en C₁₈ insaturé et la tétramine de triéthylène), en tant qu'agent dispersant d'un fluide de correction à base de solvant organique. Ce dispersant améliore la dispersion de l'oxyde de titane (pigment blanc) dans le fluide de correction et son pouvoir opacifiant.

La demande JP2008/115205 décrit l'utilisation d'une polyamine amide phosphate telle que l'ANTI-TERRA P commercialisée par la société BYK dans des fluides de correction à base de solvant organique, de résine acrylique et de TiO₂ pour améliorer les propriétés opacifiantes.
La demande JPH07166114 décrit l'utilisation de polyaminoamides en tant qu'additif dans des fluides de correction à base de solvant organique. La formule générale recouvre un grand nombre d'additifs et un grand nombre de produits commerciaux sont cités au paragraphe [0019] dont l'ANTI-TERRA P, l'ANTI-TERRA U et le DISPERBYK-130® commercialisés par la société BYK qui sont également exemplifiés.

Toutefois les inventeurs se sont aperçus de façon surprenante qu'un dispersant particulier, une polyamine amide d'acide polycarboxylique obtenu par réaction entre un dimère d'acide gras et une diamine l'acide gras étant un acide gras en C14 à C22, tels que l'ANTI-TERRA 205 ou l'ANTI-TERRA 204 commercialisés par la société BYK permet d'obtenir un fluide de correction ayant une meilleure stabilité au cours du vieillissement et une plus grande facilité et vitesse de ré-homogénéisation (exemple 3) par rapport à un fluide de correction n'en contenant pas (exemple 4) et par rapport aux dispersants exemplifiés de l'art antérieur et en particulier au DISPERBYK-130®, à l'ANTI-TERRA P et à l'ANTI-TERRA U commercialisés par la société BYK.

La demande JPH07166114 cite certes l'ANTI-TERRA 204 commercialisé par la société BYK mais parmi de nombreux autres produits commerciaux dont l'ANTI-TERRA P, l'ANTI-TERRA U et le DISPERBYK-130® qui ne donnent pas de bons résultats de stabilité de la ré-homogénéisation dans le temps (exemple 3). En outre aucun des exemples de ce document n'utilise l'ANTI-TERRA 204 et rien n'incite à l'utiliser préférentiellement aux autres additifs cités.

La présente invention est donc une sélection inventive du dispersant permettant d'obtenir de façon surprenante la meilleure stabilité de ré-homogénéisation dans le temps parmi tous ceux cités.
Les documents US5290839, US5338348 et US2014/249256 citent également l'ANTI-TERRA 204 commercialisé par la société BYK dans leurs exemples mais uniquement dans des compositions de revêtement (en particulier dans des peintures anticorrosion) et non dans des fluides de correction.
En outre dans ces exemples, la quantité d'agent opacifiant est toujours inférieure à 37% en poids, ce qui ne permet pas d'avoir un bon pouvoir couvrant en une seule application (un seul dépôt). L'écriture peut être visible au travers du film déposé.

La présente invention concerne donc un fluide de correction comprenant :
a- un solvant organique,
b- un agent dispersant et mouillant comprenant une polyamine amide d'acide polycarboxylique obtenu par réaction entre un dimère d'acide gras et une diamine, l'acide gras étant un acide gras en C14 à C22, avantageusement un sel de polyamine amide d'acide polycarboxylique,
c- un agent opacifiant en une teneur comprise entre 37 et 60% en poids, par rapport au poids total du fluide de correction,
d- une résine,
e- et éventuellement un additif.

Au sens de la présente invention on entend par « fluide correction » tout fluide de couleur blanche et opaque contenant un agent opacifiant, tel qu'un pigment blanc, (en particulier en une teneur avant séchage comprise entre 37 et 60% en poids, par rapport au poids total du fluide correction avant séchage et avantageusement en une teneur après séchage comprise entre 50 et 90% , en particulier de 75% en poids par rapport au poids total du fluide correction après séchage) ayant une viscosité comprise entre 50 et 150 cPs mesurée à 10°C et à un taux de cisaillement de 100 s⁻¹ avec le rhéomètre de la marque Anton Paar Modèle MCR 301 et destiné à corriger les marques faites par un instrument d'écriture, en particulier un stylo. En particulier le fluide de correction est différent d'une peinture et doit avoir un temps de séchage à la réécriture (c'est-à-dire le temps au bout duquel il est possible de réécrire correctement sur le film) relativement court pour permettre justement une telle réécriture, plus particulièrement il est mesuré entre 20 et 25 sec sur un film humide de 75 microns d'épaisseur et 10 cm de longueur appliqué au hand coater (Applicateur de film à fente usiné 75µm (référence 1114 de Labomat ou modèle 360 d'Erichsen ou équivalent) selon les conditions suivantes :
Le test est réalisé dans une pièce avec air conditionné et humidité contrôlée (23°C (+/- 2°C) / 50% (+/- 5%) HR) sur un papier Baumgartner ISO12757 (21cm x 29,7cm) disposé sur une table à vide perforée (22,8cm x 30,5cm avec des trous de Ø 2mm décalés et espacés de 2,5cm) avec un applicateur de film à fente usiné 75µm (référence 1114 de Labomat ou modèle 360 d'Erichsen ou équivalent) et un stylo bille avec encre solvantée noire et bille de diamètre 1 mm.
Le film humide d'épaisseur 75µm est appliqué dans le sens de la largeur de la feuille.
Dès que le film mesure environ 10cm de long, le chronomètre est démarré et le papier est placé sur une pile composée de 5 feuilles de papier (au minimum).
A partir de 10 secondes et toutes les 5 secondes, les 7 premières lettres du mot « correction » sont écrites sur le film à l'aide du stylo bille ; la pointe du stylo est essuyée avec un papier Kimwipes et 1 alpha est dessiné rapidement sur du papier brouillon pour s'assurer que le stylo écrit correctement. Le test est arrêté lorsque les caractères sont clairs et entiers pour 2 intervalles de temps consécutifs ou lorsque 120 secondes se sont écoulées.
La feuille de test est alors placée devant une source de lumière pour vérifier l'homogénéité en épaisseur du film sec. Le film est considéré comme étant sec lorsqu'il ne se déforme pas lors de l'écriture, lorsque le mot écrit est clair et entier, et que le trait du stylo est continu même si le stylo a entraîné 2 ou 3 minuscules particules de film. Une moyenne est ensuite réalisée sur 5 essais.
Le fluide de correction selon l'invention est à base de solvant organique.
Au sens de la présente invention on entend par « fluide de correction à base de solvant organique», tout fluide de correction dont le solvant est un solvant organique. Avantageusement un tel fluide de correction ne contient pas d'eau.
En particulier le solvant organique a) peut-être un hydrocarbure halogéné, un hydrocarbure aliphatique, tel que par exemple un cyclohexane non halogéné ou alkylé, un alcool de faible poids moléculaire ou un alkyle benzène. Plus particulièrement le solvant organique a) est choisi parmi les hydrocarbures aliphatiques, avantageusement non halogénés. Plus avantageusement le solvant organique a) est choisi parmi les pentanes, heptanes, octanes, cyclohexanes et/ou hexanes, en particulier alkylés. Encore plus avantageusement le solvant organique a) est choisi dans le groupe constitué par les alkylates de naphta léger, le n-heptane, le diméthylpentane, le diméthylhexane, l'éthylpentane, le méthylhexane, le méthylcyclohexane, l'isooctane et leurs mélanges. Ce solvant peut en particulier être commercialisé sous la dénomination EXXSOL® HEPTANE ou sous la dénomination Isopar® E par la société Exxon Mobil. Il peut également s'agir d'un mélange de ces deux solvants.
Dans un mode de réalisation particulièrement avantageux de la présente invention, la teneur en solvant organique a) du fluide de correction selon l'invention est comprise entre 25 et 75% en poids, avantageusement entre 30 et 55% en poids, encore plus avantageusement entre 35 et 50 % en poids, plus particulièrement entre 35 et 45% en poids, encore plus particulièrement entre 40 et 45 % en poids, par rapport au poids total du fluide de correction.

Le fluide de correction selon la présente invention comprend donc un agent dispersant et mouillant b) comprenant (avantageusement étant constitué par) une polyamine amide d'acide polycarboxylique obtenu par réaction entre un dimère d'acide gras et une diamine, l'acide gras étant un acide gras en C14 à C22, avantageusement un sel de polyamine amide d'acide polycarboxylique, en particulier dispersé dans un solvant organique, plus avantageusement une polyamine amide saturé d'acide polycarboxylique.
Cet agent dispersant et mouillant a pour fonction d'améliorer la dispersion du pigment blanc dans le solvant du fluide de correction et en particulier de faciliter sa réhomogénéisation et donc le vieillissement au cours du temps du fluide de correction.
L'acide gras est donc un acide gras en C₁₄ à C₂₂, avantageusement en C₁₆ à C₂₀, plus avantageusement en C₁₈, en particulier insaturé.
De façon avantageuse la diamine a la formule générale suivante : NR1R2(CH₂)ₙNR3R4 dans laquelle R1, R2, R3 et R4 représentent indépendamment l'un de l'autre un atome d'hydrogène ou un groupe alkyle en C₁-C₆, avantageusement un atome d'hydrogène ou un groupe méthyle, et n représente un nombre entier compris entre 1 et 6, particulier entre 2 et 4 avantageusement n = 3. De façon avantageuse la diamine est la N,N-diméthyle 1,3 propanediamine ou la 1,3 propanediamine ou un mélange de ces diamines.
Au sens de la présente invention, on entend par « groupe alkyle en C₁-C₆ » tout groupe alkyle linéaire ou ramifié comprenant de un à six atomes de carbones, tel que par exemple le groupe méthyle, éthyle, propyle, isopropyle, n-propyle, butyle, isobutyle, ter-butyle, pentyle, hexyle, n-hexyle. Avantageusement il s'agit d'un groupe méthyle.
En particulier l'agent dispersant et mouillant b) peut-être l'ANTI-TERRA 204 ou l'ANTI-TERRA 205 commercialisés par la société BYK, plus avantageusement l'ANTI-TERRA 205.
L'agent dispersant et mouillant b) selon l'invention n'est donc pas un sel d'acide phosphorique de polyamine amides d'acide carboxylique à longue chaine tel que l'ANTI-TERRA P, ni un sel de polyamine amides insaturé et de polyesters acide de bas poids moléculaire tel que l'ANTI-TERRA U, ni une solution de polyamine amides d'acides polycarboxyliques insaturés obtenue par réaction entre un trimère d'acide gras en C₁₈ insaturé et la tétramine de triéthylène telle que le DISPERBYK 130, ni un sel alkylammonium d'acide polycarboxylique.
Avantageusement l'agent dispersant et mouillant b) présente au moins l'une des caractéristiques suivantes :
- indice d'amine : 37 mg KOH/g ;
- indice d'acide : 40 mg KOH/g ;
- densité à 20 °C : 0,9 g /ml ;
- pourcentages de matière non volatile : 52 % ;
- point éclair : 24 °C.
En outre l'agent dispersant et mouillant b) peut-être dispersé dans un solvant organique, tel que par exemple un mélange méthoxypropanol/hydrocarbure isoparaffinique, en particulier avec un ratio 3/2.
Dans un mode de réalisation avantageux de la présente invention, la teneur en agent dispersant et mouillant b) dans le fluide de correction selon l'invention est comprise entre 0,01 et 10% en poids, avantageusement entre 0,03 et 5% en poids, en particulier entre 0,1 et 3 % en poids, plus avantageusement entre 0,5 et 2% en poids, par rapport au poids total du fluide de correction.
Avantageusement l'agent dispersant et mouillant b) agit par contrôle de la floculation. Ses molécules ont des groupements à affinité pigmentaire qui peuvent se lier à plusieurs pigments en créant ainsi un réseau entre les différents pigments. La création de ce réseau permet d'augmenter la viscosité et de ralentir la sédimentation du produit qui sera alors plus facilement réhomogénéisable.

Le fluide de correction selon la présente invention comprend en outre un agent opacifiant c).

Au sens de la présente invention on entend par « agent opacifiant », tout pigment, en particulier blanc, qui permet de conférer au fluide de correction son pouvoir couvrant, c'est-à-dire sa capacité de complètement recouvrir et cacher une marque d'écriture. En particulier l'agent opacifiant c) est choisi parmi le kaolin, le carbonate de calcium, l'oxyde de titane et leurs mélanges, en particulier parmi le carbonate de calcium, l'oxyde de titane et leurs mélanges. Il s'agit avantageusement de l'oxyde de titane (TiO₂) qui possède un pouvoir opacifiant supérieur au kaolin et au carbonate de calcium. L'oxyde de titane peut être choisi parmi l'oxyde de titane rutile, l'oxyde de titane anatase ou leurs mélanges et peut éventuellement avoir subi un traitement de surface organique ou minérale, par exemple à l'aide d'oxyde d'aluminium, d'oxyde de silicium ou d'oxyde de zirconium, en particulier d'oxyde d'aluminium et de silicium. Il peut avoir une taille des particules moyennes (D₅₀) comprises entre 0,2 µm et 0,4 µm, avantageusement 0,21 µm. Il peut posséder une absorption moyenne d'huile de 37 (quantité d'huile de lin absorbée en gramme pour 100 grammes d'oxyde de titane). L'oxyde de titane est disponible commercialement auprès de la société Tronox, sous la dénomination commerciale CR-813.
Il peut également s'agir d'un mélange de dioxyde de titane et de carbonate de calcium (avantageusement entre 60 et 97% en poids de carbonate de calcium et entre 3 et 40% en poids de dioxyde de titane) tel que par exemple le produit FP-470 disponible commercialement chez la société FP-Pigments. Le carbonate de calcium, seul ou en mélange avec le dioxyde de titane, peut avoir une taille des particules moyennes (D₅₀) comprises entre 0,3 µm et 3 µm, avantageusement de 1 µm. Il peut posséder une surface spécifique (BET) d'environ 10 m²/g et/ou une densité d'environ 2,8kg/dm³. La teneur en agent opacifiant c) du fluide de correction selon l'invention est comprise entre 37 et 60% en poids, avantageusement entre 40 et 60% en poids, plus avantageusement entre 40 et 50% en poids, en particulier entre 42 et 47%, plus particulièrement entre 42 et 46 % en poids, par rapport au poids total du fluide de correction.

Le fluide de correction selon la présente invention comprend de plus une résine d) qui permet de lier l'agent opacifiant au papier et aide à la formation d'un film flexible mais continu qui couvre ce qui reste de la composition du fluide de correction une fois que le solvant s'est évaporé. Cette résine est donc avantageusement un matériau polymérique de formation de film. De façon avantageuse la résine est choisie parmi les polymères chlorure de vinyle, les résines acryliques et les copolymères chlorure de vinyle/ éther de vinyle.
En particulier, il s'agit d'une résine acrylique, plus avantageusement un copolymère vinyle acrylate, encore plus avantageusement un copolymère styrène acrylate. Plus particulièrement cette résine peut être commercialisée par la société Omnova solutions sous la dénomination PLIOWAY® EC1. Dans un mode de réalisation avantageux de la présente invention, la teneur en résine d) du fluide de correction selon l'invention est comprise entre 5 et 15% en poids, avantageusement entre 8 et 10% en poids, par rapport au poids total du fluide de correction.

Le fluide de correction peut en outre comprendre un additif e) bien connu de l'homme du métier dans le domaine des fluides de correction à base de solvant organique, en particulier choisi parmi les azurants optiques, les agents mouillant, les charges, les plastifiants (exemple : des phtalates entre 1 et 5% en poids par rapport au poids total du fluide de correction), les tensioactifs, des additifs rhéologiques (pour modifier la viscosité du fluide tels que les agents thixotropiques) et leur mélanges, avantageusement parmi les azurants optiques, les additifs rhéologiques, les agents mouillant et leur mélanges, plus particulièrement parmi les azurants optiques, les agents mouillant et leurs mélanges.
En particulier la teneur en additif e) du fluide de correction selon la présente invention est comprise entre 0 et 5% en poids, avantageusement entre 0 et 4% en poids, en particulier entre 0 et 3% en poids, par rapport au poids total du fluide de correction.
Ainsi le fluide de correction peut comprendre un azurant optique qui permet de faire paraître le film plus ou moins blanc, en particulier pour permettre de teinter le fluide de correction pour l'amener à la couleur du papier dans le but d'avoir une correction « discrète ». Il peut ainsi s'agir de pâtes ou dispersions pigmentaires à base de noir de carbone tel que par exemple le TINT AYD AL 317H de la société Elementis specialities ou à base d'oxyde de titane tel que par exemple le TINT AYD AL 103 de la société Elementis specialities.
Avantageusement la teneur en azurant optique du fluide de correction selon la présente invention lorsqu'il est présent est comprise entre 0,02 et 1,05% en poids, plus avantageusement entre 0,5 et 1% en poids, en particulier entre 0,8 et 0,99%, plus particulièrement entre 0,8 et 0,95% en poids, par rapport au poids total du fluide de correction.
Le fluide de correction selon la présente invention peut également comprendre un agent mouillant. Cet agent mouillant permet d'améliorer la dispersion des pigments dans le fluide de correction.
En tant qu'agent mouillant, on peut citer la lécithine de soja.
Avantageusement la teneur en agent mouillant du fluide de correction selon la présente invention lorsqu'il est présent est comprise entre 1 et 3% en poids, plus avantageusement entre 1,5 et 2% en poids, par rapport au poids total du fluide de correction.
Le fluide de correction selon la présente invention peut également comprendre une charge. En tant que charge on peut citer le sulfate de baryum par exemple.
Le fluide de correction selon la présente invention peut également comprendre un additif rhéologique.
En tant qu'additif rhéologique, on peut citer la cire polyamide, tel que celle commercialisée sous la dénomination DISPARLON A670-20M par la société KUSUMOTO CHEMICALS.

Avantageusement la teneur en additif rhéologique du fluide de correction selon la présente invention, lorsqu'il est présent, est comprise entre 0,5 et 1% en poids, par rapport au poids total du fluide de correction.
Avantageusement l'extrait sec du fluide de correction selon la présente invention est compris entre 55 et 62% en poids en particulier entre 55,5% et 57,5 % en poids ou entre 58,5 et 61,5% en poids.

Le fluide de correction selon la présente invention présente une excellente stabilité (en particulier en ce qui concerne le pouvoir couvrant) au cours du vieillissement (avantageusement pendant au moins 1 mois de stockage à 40°C et 20% d'humidité relative, encore plus avantageusement pendant au moins 2 mois de stockage à 40°C et 20% d'humidité relative) et une grande facilité de réhomogénéisation (en particulier absence de sédimentation).

Le fluide de correction est fabriqué par un procédé bien connu de l'homme du métier, en particulier par dispersion puis broyage, par exemple à l'aide d'un broyeur à billes, en particulier avec des billes de diamètre entre 0,8 et 1,0 mm, en particulier pendant environ entre 20 et 30 minutes, pour affiner le fluide.
La présente invention concerne en outre un dispositif d'application d'un fluide de correction caractérisé en ce qu'il comprend le fluide de correction selon la présente invention. Ce dispositif d'application peut par exemple être du type stylos pour fluide de correction ou flacon (bouteille) avec applicateurs type pinceaux ou mousse, en particulier il s'agit d'un stylo du type Shake'n Squeeze® commercialisé par BIC.

La présente invention sera mieux comprise à la lumière des exemples qui suivent qui sont donnés à titre indicatif non limitatif.

### Exemple 1 : Fluide de correction selon l'invention

Un exemple de formulation est rassemblé dans le tableau 1 ci-dessous :

| **INGREDIENTS** | **FONCTION** | **% en poids** | **N° CAS** |
|---|---|---|---|
| EXXSOL HEPTANE | Solvant | 21,54 | 64742-49-0 |
| ISOPAR E | Solvant | 21,54 | 64741-66-8 |
| PLIOWAY EC1 | Résine | 9,15 | 118922-88-6 |
| YELKIN TS (lécithine de soja) | Agent mouillant | 1,85 | 8030-76-0 |
| ANTI-TERRA-205 | Agent mouillant et dispersant | 1,00 | 162627-17-0 107-98-2/ 64741-65-7 |
| TRONOX CR 813 | Agent opacifiant | 44,00 | 13463-67-7 7631-86-9/ 21645-51-2/ 1314-23-4 |
| TINT-AYD AL 103 | Azurant optique | 0,89 | 13463-67-7 8052-41-3/ 96-29-7 |
| TINT-AYD AL 317 | Azurant optique | 0,03 | 1333-86-4 64742-82-1/64742-47-8/64742-88-7/8052-41-3/96-29-7/1330-20-7 |
| | | 100,00 | |

### Exemple 2 : Fluide de correction selon l'invention

Un autre exemple de formulation est rassemblé dans le tableau 2 ci-dessous :

| **INGREDIENTS** | **FONCTION** | **% en poids** | **N° CAS** |
|---|---|---|---|
| EXXSOL HEPTANE | Solvant | 31,32 | 64742-49-0 |
| ISOPAR E | Solvant | 7,30 | 64741-66-8 |
| PLIOWAY EC1 | Résine | 9,69 | 118922-88-6 |
| YELKIN TS (lécithine de soja) | Agent mouillant | 1,96 | 8030-76-0 |
| ANTI-TERRA-205 | Agent mouillant et dispersant | 1,00 | 162627-17-0 107-98-2 / 64741-65-7 |
| TRONOX CR 813 | Agent opacifiant | 32,80 | 13463-67-7 7631-86-9/ 21645-51-2/ 1314-23-4 |
| FP-470 | Agent opacifiant | 14,10 | 471-34-1 13463-67-7 |
| DISPARLON A670-20M | additif rhéologique | 0,85 | |
| TINT-AYD AL 103 | Azurant optique | 0,95 | 13463-67-7 8052-41-3 / 96-29-7 |
| TINT-AYD AL 317 | Azurant optique | 0,03 | 1333-86-4 64742-82-1/64742-47-8/64742-88-7/8052-41-3/96-29-7/1330-20-7 |
| | | 100,00 | |

### Exemple 3 : Comparaison de la stabilité au stockage et de la capacité de réhomogénéisation du fluide de correction selon l'invention avec un fluide de correction contenant du DISPERBYK 130, de l'ANTI-TERRA U, ou de l'ANTI-TERRA P à la place de l'ANTI-TERRA 205.

Les résultats entre le DISPERBYK 130 (ex comparatif 1), l'ANTI-TERRA U (ex comparatif 2), ou l'ANTI-TERRA P (ex comparatif 3) et l'ANTI-TERRA 205 (ex 1) au même % d'introduction (1% en poids), sur la même base de formule (selon l'exemple 1) ont été comparés.

Tous les tests ont été réalisés avec chaque fluide assemblé dans le « Shake'n Squeeze® » de BIC. Le Shake'n Squeeze® est un article de correction sous forme d'un stylo à l'intérieur duquel il y a le fluide de correction et un barreau d'agitation. Le consommateur secoue l'article avant utilisation pour ré-homogénéiser le fluide qui a pu sédimenter et appuie sur le corps souple pour faire sortir le fluide sur le papier. La description des tests est la suivante:

### « Starting »

C'est un test de démarrage du produit réalisé sur un minimum de 10 produits pour faire une moyenne. L'article va subir plusieurs cycles d'agitation (de 1 à 6 selon la note obtenue) sur une table d'agitation ou agitateur oscillant de la marque HEIDOLPH, modèle PROMAX 2020 (ou équivalent) et entre chaque cycle, on vérifie :
- par une secousse manuelle (capuchon vers le bas) de haut en bas de 50 cm de hauteur environ si le barreau est libre dans l'article, s'il n'est pas emprisonné dans du fluide sédimenté ce qui empêcherait de ré-homogénéiser correctement le fluide -un score est donné sur ce critère appelé « Shake back » - Si la note obtenue est de 10 cela veut dire que le barreau était libre dès le 1er cycle. Si la note obtenue est de 0 cela veut dire que le barreau ne s'est pas « décroché » même après 5 cycles.
- Par une correction sur 4 mots pour vérifier si le pouvoir couvrant est bon - un score est donné sur ce critère appelé « Coverage ». Si la note obtenue est de 10, cela veut dire que la correction est parfaite - une note de 0 si la correction n'est pas correcte. Pour effectuer ce test, on applique le fluide sur chacune des lignes d'un papier pour imprimante 80g/m² sur lequel le mot « CORRECTION » est imprimé 4 fois par imprimante jet d'encre HP Officejet 6100 Modèle H611a contenant de l'encre noire HP de référence 932 de manière à couvrir chaque mot du fluide humide en une seule application sans revenir en arrière. Le papier est ensuite mis à sécher à température ambiante à l'air libre pendant 15 minutes puis on vérifie visuellement la couvrance du film à l'aide d'une cabine à lumière TQC modèle VF0600 ou équivalent équipée d'une lumière incandescente F type E27 (4x40W, température 2700K). Une correction parfaite signifie que le mot ne doit pas être visible à travers le film et que le film doit couvrir complétement les 4 mots.

Par ailleurs si l'article ne démarre pas à cause du fluide sédimenté qui bloque la pointe, on comptabilise le produit dans le critère « No start ».

Pour les vieillissements accélérés dans l'enceinte climatique réglée à 40°C et 20% d'humidité relative, les articles sont stockés dans 2 positions ; pointe en l'air (Point up) et pointe en bas (Point down). La position pointe en bas est la plus critique car le fluide sédimenté peut facilement bloquer la pointe. Ainsi les tests sont réalisés sur un minimum de 20 produits (10 stockés pointe en bas et 10 stockés pointe en haut) après remise à température ambiante pendant 24 heures.

### « User coverage »

Ce test réalisé sur 3 produits pour faire une moyenne permet d'examiner visuellement le pouvoir couvrant (« coverage ») d'un produit de correction appliqué à la manière d'un consommateur et la possibilité de réécrire (« rewriting ») sur le film sec sans l'endommager. Il utilise une machine d'écriture Minitek APC ou Mikron avec une vitesse d'écriture de 4,5m/min, un angle d'écriture de 70°C, une longueur d'écriture de 10m, une circonférence des cercles de 100 mm, un espacement entre les cercles de 2,2 mm sur Minitek APC (position 7 sur Mikron) et une rotation axiale du crayon tous les 100 cercles, la machine étant équipée :
- d'un stylo bille à encre solvantée bleue, noire et rouge et bille de diamètre 1mm ;
- d'un stylo gel à encre aqueuse bleue, noire et rouge et bille de diamètre 0,7 mm ;
- d'un stylo roller à encre libre et base aqueuse bleue, noire et rouge et bille de diamètre 0,7mm
ainsi qu'un Papier Baumgartner ISO 12757.

Après écriture avec la machine (tracé de cercles) avec les différentes encres, la trace machine est laissée séchée à l'air libre pendant 1 heure.

Ce test utilise également des formulaires comprenant le mot « CORRECTION » écrit 4 fois et imprimés en noir avec une imprimante laser et en noir, cyan, magenta et jaune avec une imprimante jet d'encre (cartouche HP 932 pour l'encre noire / cartouche HP 933 pour la couleur) qui sont également laissés séchés à l'air libre pendant 1 heure après impression. Pour effectuer le test, on applique le fluide de correction en traçant un trait de 2 cm de long (sur la trace machine) ou pour corriger le mot « CORRECTION » (sur le formulaire) de manière à couvrir chaque mot ou cercle du fluide humide en une seule application sans revenir en arrière. Le papier est ensuite mis à sécher à température ambiante à l'air libre pendant 30 minutes puis on vérifie visuellement la couvrance du film à l'aide d'une cabine à lumière TQC modèle VF0600 ou équivalent équipée d'une lumière incandescente F type E27 (4x40W, température 2700K). Une correction parfaite (note de 10) signifie que le mot/cercle ne doit pas être visible à travers le film et que le film doit couvrir complétement les 4 mots. Une note de 0 est attribuée si le texte ou cercle est clairement visible à travers le film sec.

Cinq minutes après la fin du test, le mot « REECRITURE » est écrit une fois sur le papier corrigé pour chaque échantillon testé en utilisant le stylo à bille à encre solvantée noire et bille de diamètre 1mm (seulement dans le cas de l'impression laser et jet d'encre noir). Pour chaque produit de correction testé, la qualité de la réécriture est notée:
- note de 10 si le film sec n'est pas endommagé par la réécriture.
- note de 0 s'il y a un effritement important du film sec et la réécriture est illisible.

Le tableau 3 ci-dessous rassemble les résultats obtenus :

| | | **Ex 1** | **Ex comparatif 1** | **EX comparatif 2** | **Ex comparatif 3** |
|---|---|---|---|---|---|
| **Résultats à T0** | **Starting** | | | | |
| | Coverage: | 10 | 10 | 8,7 | 9 |
| | **User coverage** | | | | |
| | coverage | 10 | 10 | 10 | 10 |
| | rewriting | 10 | 10 | 10 | 10 |
| **Résultats après 1 mois de stockage à 40°C et 20% d'humidité relative** | **Starting** | | | | |
| | POINT UP | | | | |
| | Shake back | 10 | 7,6 | 3,2 | 3,6 |
| | Coverage | 10 | 10 | 10 | 9,8 |
| | NO START | 0 | 0 | 0 | 0 |
| | POINT DOWN | | | | |
| | Shake back | 10 | 1,6 | 0 | 0 |
| | Coverage | 8,2 | 0 | 0 | 0 |
| | NO START | 0 | 5 | 5 | 5 |
| **Résultats après 2 mois de stockage à 40°C et 20% d'humidité relative** | **Starting** | | | | |
| | POINT UP | | | | |
| | Shake back | 10 | 3,6 | 5,2 | 2,4 |
| | Coverage | 10 | 2,6 | 9,2 | 9,4 |
| | NO START | 0 | 0 | 0 | 0 |
| | POINT DOWN | | | | |
| | Shake back | 7,2 | 0 | 0 | 0 |
| | Coverage | 8 | 0 | 0 | 0 |
| | NO START | 0 | 5 | 5 | 5 |

Ces résultats confirment une meilleure efficacité de l'Anti-terra 205 par rapport au Disperbyk 130, à l'Anti-terra P et à l'Anti-terra U sur le critère de la stabilité du fluide au cours du vieillissement et de la facilité de ré-homogénéisation. Il est en particulier à constater que le fluide contenant du Disperbyk 130, de l'Anti-terra P ou de l'Anti-terra U est difficile à ré-homogénéiser et que beaucoup de dispositifs d'application contenant ce fluide ne fonctionnent pas dès un mois de vieillissement.

### Exemple 4 : Comparaison de la stabilité au stockage et de la capacité de ré-homogénéisation du fluide de correction selon l'invention avec un fluide de correction contenant de l'ANTI-TERRA 205 ou n'en contenant pas.

Les résultats entre un fluide de correction contenant de l'ANTI-TERRA 205 (ex 2) ou n'en contenant pas, sur la même base de formule (selon l'exemple 2) ont été comparés.

Tous les tests ont été réalisés avec chaque fluide assemblé dans une bouteille avec applicateur type mousse constituée par un flacon et un capuchon muni d'une tige au bout de laquelle est soudée l'applicateur en mousse. Le flacon est muni au niveau de son goulot d'une petite pièce plastique creuse (appelée « wiper ») pour venir essorer l'applicateur sur le bord du flacon. Le consommateur secoue la bouteille avant utilisation pour ré-homogénéiser le fluide qui a pu sédimenter et utilise l'applicateur mousse pour appliquer le fluide sur le papier. La description des tests est la suivante: « Starting »

C'est un test de démarrage du produit réalisé sur un minimum de 5 produits pour faire une moyenne. L'article va subir plusieurs cycles d'agitation (de 1 à 6 selon la note obtenue) sur une table d'agitation ou agitateur oscillant de la marque HEIDOLPH, modèle PROMAX 2020 (ou équivalent) et entre chaque cycle, on vérifie :
- Par une correction sur 4 mots pour vérifier si le pouvoir couvrant est bon - un score est donné sur ce critère appelé « Coverage ». Si la note obtenue est de 10, cela veut dire que la correction est parfaite - une note de 0 si la correction n'est pas correcte. Pour effectuer ce test, on applique le fluide en un seul passage et en 4 secondes sur chacune des lignes d'un papier pour imprimante 80g/m² sur lequel le mot « CORRECTION » est imprimé 4 fois par imprimante jet d'encre HP Officejet 6100 Modèle H611a contenant de l'encre noire HP de référence 932 de manière à couvrir chaque mot du fluide humide en une seule application sans revenir en arrière. Le papier est ensuite mis à sécher à température ambiante à l'air libre pendant 15 minutes puis on vérifie visuellement la couvrance du film à l'aide d'une cabine à lumière TQC modèle VF0600 ou équivalent équipée d'une lumière incandescente F type E27 (4x40W, température 2700K). Une correction parfaite signifie que le mot ne doit pas être visible à travers le film et que le film doit couvrir complétement les 4 mots.

### « User coverage »

Ce test réalisé sur 3 produits pour faire une moyenne permet d'examiner visuellement le pouvoir couvrant (« coverage ») d'un produit de correction appliqué à la manière d'un consommateur et la possibilité de réécrire (« rewriting ») sur le film sec sans l'endommager. Il utilise une machine d'écriture Minitek APC ou Mikron avec une vitesse d'écriture de 4,5m/min, un angle d'écriture de 70°C, une longueur d'écriture de 10m, une circonférence des cercles de 100 mm, un espacement entre les cercles de 2,2 mm sur Minitek APC (position 7 sur Mikron) et une rotation axiale du crayon tous les 100 cercles, la machine étant équipée :
- d'un stylo bille à encre solvantée bleue, noire et rouge et bille de diamètre 1mm ;
- d'un stylo gel à encre aqueuse bleue, noire et rouge et bille de diamètre 0,7 mm ;
- d'un stylo roller à encre libre et base aqueuse bleue, noire et rouge et bille de diamètre 0,7mm
ainsi qu'un Papier Baumgartner ISO 12757.

Après écriture avec la machine (tracé de cercles) avec les différentes encres, la trace machine est laissée séchée à l'air libre pendant 1 heure.

Ce test utilise également des formulaires comprenant le mot « CORRECTION » écrit 4 fois et imprimés en noir avec une imprimante laser et en noir, cyan, magenta et jaune avec une imprimante jet d'encre (cartouche HP 932 pour l'encre noire / cartouche HP 933 pour la couleur) qui sont également laissés séchés à l'air libre pendant 1 heure après impression. Pour effectuer le test, on applique le fluide de correction sur 2 cm de long (sur la trace machine) ou pour corriger le mot « CORRECTION » (sur le formulaire) de manière à couvrir chaque mot ou cercle du fluide humide en une seule application sans revenir en arrière. Le papier est ensuite mis à sécher à température ambiante à l'air libre pendant 30 minutes puis on vérifie visuellement la couvrance du film à l'aide d'une cabine à lumière TQC modèle VF0600 ou équivalent équipée d'une lumière incandescente F type E27 (4x40W, température 2700K). Une correction parfaite (note de 10) signifie que le mot/cercle ne doit pas être visible à travers le film et que le film doit couvrir complétement les 4 mots. Une note de 0 est attribuée si le texte ou cercle est clairement visible à travers le film sec.

Cinq minutes après la fin du test, le mot « REECRITURE » est écrit une fois sur le papier corrigé pour chaque échantillon testé en utilisant le stylo à bille à encre solvantée noire et bille de diamètre 1mm (seulement dans le cas de l'impression laser et jet d'encre noir). Pour chaque produit de correction testé, la qualité de la réécriture est notée:
- note de 10 si le film sec n'est pas endommagé par la réécriture.
- note de 0 s'il y a un effritement important du film sec et la réécriture est illisible.

Le tableau 4 ci-dessous rassemble les résultats obtenus :

| | | **Ex 2** | **Ex 2 sans** ANTI-TERRA 205 |
|---|---|---|---|
| **Résultats à T0** | **User coverage** | | |
| | coverage | 10 | 10 |
| | rewriting | 10 | 10 |
| **Résultats après 1 mois de stockage à 40°C et 20% d'humidité relative** | **Starting** | | |
| | Coverage | 6,4 | 4,2 |
| **Résultats après 2 mois de stockage à 40°C et 20% d'humidité relative** | **Starting** | | |
| | Coverage | 6,6 | 3,4 |
| **Résultats après 6 mois de stockage à 40°C et 20% d'humidité relative** | **Starting** | | |
| | Coverage | 7,0 | 0 |

Ces résultats confirment l'efficacité de l'Anti-terra 205 sur le critère de la stabilité du fluide au cours du vieillissement et de la facilité de ré-homogénéisation. Il est en particulier à constater que le fluide ne contenant pas d'Anti-terra 205 est difficile à ré-homogénéiser dès un mois de vieillissement.

## Revendications

1. Fluide de correction comprenant :
a- un solvant organique,
b- un agent dispersant et mouillant comprenant une polyamine amide d'acide polycarboxylique obtenue par réaction entre un dimère d'acide gras et une diamine, l'acide gras étant un acide gras en C14 à C22, avantageusement un sel de polyamine amide d'acide polycarboxylique,
c- un agent opacifiant en une teneur comprise entre 37 et 60% en poids, par rapport au poids total du fluide de correction,
d- une résine,
e- et éventuellement un additif.

2. Fluide de correction selon la revendication 1, **caractérisé en ce que** l'acide gras est un acide gras en C₁₈, en particulier insaturé.

3. Fluide de correction selon l'une quelconque des revendications 1 ou 2, **caractérisé en ce que** la diamine a la formule générale suivante : NRlR2(CH₂)ₙNR3R4 dans laquelle R1, R2, R3 et R4 représentent indépendamment l'un de l'autre un atome d'hydrogène ou un groupe alkyle en C₁-C₆, avantageusement un atome d'hydrogène ou un groupe méthyle, et n représente un nombre entier compris entre 1 et 6, avantageusement n = 3.

4. Fluide de correction selon l'une quelconque des revendications 1 à 3, **caractérisé en ce que** sa teneur en agent dispersant et mouillant b) est comprise entre 0,01 et 10% en poids, avantageusement entre 0,03 et 5% en poids, en particulier entre 0,5 et 2% en poids, par rapport au poids total du fluide de correction.

5. Fluide de correction selon l'une quelconque des revendications 1 à 4, **caractérisé en ce que** le solvant organique a) est choisi parmi les hydrocarbures aliphatiques, en particulier choisi dans le groupe des alkylates de naphta léger, du n-heptane, du diméthylpentane, du diméthylhexane, de l'éthylpentane, du méthylhexane, du méthylcyclohexane, de l'isooctane et de leurs mélanges.

6. Fluide de correction selon l'une quelconque des revendications 1 à 5, **caractérisé en ce que** sa teneur en solvant organique a) est comprise entre 25 et 75% en poids, avantageusement entre 30 et 55% en poids, par rapport au poids total du fluide de correction.

7. Fluide de correction selon l'une quelconque des revendications 1 à 6, **caractérisé en ce que** l'agent opacifiant c) est du TiO₂.

8. Fluide de correction selon l'une quelconque des revendications 1 à 7, **caractérisé en ce que** sa teneur en agent opacifiant c) est comprise entre 40 et 60% en poids, avantageusement entre 40 et 50% en poids, par rapport au poids total du fluide de correction.

9. Fluide de correction selon l'une quelconque des revendications 1 à 8, **caractérisé en ce que** la résine d) est une résine acrylique, avantageusement un copolymère vinyle acrylate, plus avantageusement un copolymère styrène acrylate.

10. Fluide de correction selon l'une quelconque des revendications 1 à 9, **caractérisé en ce que** sa teneur en résine d) est comprise entre 5 et 15% en poids, avantageusement entre 8 et 10% en poids, par rapport au poids total du fluide de correction.

11. Fluide de correction selon l'une quelconque des revendications 1 à 10, **caractérisé en ce que** l'additif e) est choisi parmi les azurants optiques, les agents mouillant, les charges, un pigment modificateur de teintes, les plastifiants, les tensioactifs, des additifs rhéologiques et leur mélanges, avantageusement parmi les azurants optiques et les agents mouillant.

12. Fluide de correction selon l'une quelconque des revendications 1 à 11, **caractérisé en ce que** sa teneur en additif e) est comprise entre 0 et 5% en poids, avantageusement entre 0 et 3% en poids, par rapport au poids total du fluide de correction.

13. Fluide de correction selon l'une quelconque des revendications 11 ou 12, **caractérisé en ce que** sa teneur en azurant optique est comprise entre 0,02 et 1,05% en poids, avantageusement entre 0,5 et 1% en poids, par rapport au poids total du fluide de correction.

14. Fluide de correction selon l'une quelconque des revendications 11 ou 12, **caractérisé en ce que** sa teneur en agent mouillant est comprise entre 1 et 3% en poids, avantageusement entre 1,5 et 2% en poids, par rapport au poids total du fluide de correction.

15. Dispositif d'application d'un fluide de correction **caractérisé en ce qu'**il comprend le fluide de correction selon l'une quelconque des revendications 1 à 14.

## Patentansprüche

1. Korrekturflüssigkeit, die Folgendes umfasst:
a- ein organisches Lösungsmittel,
b- ein Dispergier- und Benetzungsmittel, umfassend ein Polycarbonsäure-Polyaminamid, das durch Reaktion zwischen einem Fettsäuredimer und einem Diamin erhalten wird, wobei die Fettsäure eine C14- bis C22-Fettsäure ist, vorteilhafterweise ein Polycarbonsäure-Polyaminamidsalz,
c- ein Trübungsmittel mit einem Gehalt zwischen 37 und 60 Gew.-%, bezogen auf das Gesamtgewicht der Korrekturflüssigkeit,
d- ein Harz,
e- und gegebenenfalls einen Zusatzstoff.

2. Korrekturflüssigkeit nach Anspruch 1, **dadurch gekennzeichnet, dass** die Fettsäure eine C₁₈-Fettsäure ist, insbesondere eine ungesättigte.

3. Korrekturflüssigkeit nach einem der Ansprüche 1 oder 2, **dadurch gekennzeichnet, dass** das Diamin die folgende allgemeine Formel aufweist:
NR1R2(CH₂)ₙNR3R4,
wobei R1, R2, R3 und R4 unabhängig voneinander ein Wasserstoffatom oder eine C₁-C₆-Alkylgruppe, vorteilhafterweise ein Wasserstoffatom oder eine Methylgruppe darstellen, und n für eine ganze Zahl zwischen 1 und 6, vorteilhafterweise für n = 3, steht.

4. Korrekturflüssigkeit nach einem der Ansprüche 1 bis 3, **dadurch gekennzeichnet, dass** ihr Gehalt an Dispergier- und Benetzungsmittel b) zwischen 0,01 und 10 Gew.-%, vorteilhafterweise zwischen 0,03 und 5 Gew.-%, insbesondere zwischen 0,5 und 2 Gew.-%, bezogen auf das Gesamtgewicht der Korrekturflüssigkeit, beträgt.

5. Korrekturflüssigkeit nach einem der Ansprüche 1 bis 4, **dadurch gekennzeichnet, dass** das organische Lösungsmittel a) ausgewählt ist aus aliphatischen Kohlenwasserstoffen, insbesondere ausgewählt aus der Gruppe von leichten Naphtha-Alkylaten, n-Heptan, Dimethylpentan, Dimethylhexan, Ethylpentan, Methylhexan, Methylcyclohexan, Isooctan und deren Gemische.

6. Korrekturflüssigkeit nach einem der Ansprüche 1 bis 5, **dadurch gekennzeichnet, dass** ihr Gehalt an organischem Lösungsmittel a) zwischen 25 und 75 Gew.-%, vorteilhafterweise zwischen 30 und 55 Gew.-%, bezogen auf das Gesamtgewicht der Korrekturflüssigkeit, beträgt.

7. Korrekturflüssigkeit nach einem der Ansprüche 1 bis 6, **dadurch gekennzeichnet, dass** das Trübungsmittel c) TiO₂ ist.

8. Korrekturflüssigkeit nach einem der Ansprüche 1 bis 7, **dadurch gekennzeichnet, dass** ihr Gehalt an Trübungsmittel c) zwischen 40 und 60 Gew.-%, vorteilhafterweise zwischen 40 und 50 Gew.-%, bezogen auf das Gesamtgewicht der Korrekturflüssigkeit, beträgt.

9. Korrekturflüssigkeit nach einem der Ansprüche 1 bis 8, **dadurch gekennzeichnet, dass** das Harz d) ein Acrylharz, vorteilhafterweise ein Vinylacrylat-Copolymer, noch vorteilhafter ein Styrol-Acrylat-Copolymer, ist.

10. Korrekturflüssigkeit nach einem der Ansprüche 1 bis 9, **dadurch gekennzeichnet, dass** ihr Harzgehalt d) zwischen 5 und 15 Gew.-%, vorteilhafterweise zwischen 8 und 10 Gew.-%, bezogen auf das Gesamtgewicht der Korrekturflüssigkeit, beträgt.

11. Korrekturflüssigkeit nach einem der Ansprüche 1 bis 10, **dadurch gekennzeichnet, dass** der Zusatzstoff e) ausgewählt ist aus optischen Aufhellern, Benetzungsmitteln, Füllstoffen, einem farbmodifizierenden Pigment, Weichmachern, Tensiden, Rheologieadditiven und Gemischen davon, vorteilhaft aus optischen Aufhellern und Benetzungsmitteln.

12. Korrekturflüssigkeit nach einem der Ansprüche 1 bis 11, **dadurch gekennzeichnet, dass** ihr Gehalt an Zusatzstoff e) zwischen 0 und 5 Gew.-%, vorteilhafterweise zwischen 0 und 3 Gew.-%, bezogen auf das Gesamtgewicht der Korrekturflüssigkeit, beträgt.

13. Korrekturflüssigkeit nach einem der Ansprüche 11 oder 12, **dadurch gekennzeichnet, dass** ihr Gehalt an optischem Aufheller zwischen 0,02 und 1,05 Gew.-%, vorteilhafterweise zwischen 0,5 und 1 Gew.-%, bezogen auf das Gesamtgewicht der Korrekturflüssigkeit, beträgt.

14. Korrekturflüssigkeit nach einem der Ansprüche 11 oder 12, **dadurch gekennzeichnet, dass** ihr Gehalt an Benetzungsmittel zwischen 1 und 3 Gew.-%, vorteilhafterweise zwischen 1,5 und 2 Gew.-%, bezogen auf das Gesamtgewicht der Korrekturflüssigkeit, beträgt.

15. Vorrichtung zum Auftragen einer Korrekturflüssigkeit, **dadurch gekennzeichnet, dass** sie die Korrekturflüssigkeit nach einem der Ansprüche 1 bis 14 umfasst.

## Claims

1. Correction fluid comprising:
a- an organic solvent;
b- a dispersing and wetting agent comprising a polyamine amide of polycarboxylic acid obtained by a reaction between a fatty acid dimer and a diamine, the fatty acid being a C14 to C22 fatty acid, advantageously a polyamine amide salt of polycarboxylic acid;
c- an opacifying agent in a content of between 37 and 60 wt.%, based on the total weight of the correction fluid;
d- a resin;
e- and optionally an additive.

2. Correction fluid according to claim 1, **characterized in that** the fatty acid is a C₁₈ fatty acid, in particular unsaturated.

3. Correction fluid according to either claim 1 or claim 2, **characterized in that** the diamine has the following general formula: NR1R2(CH₂)ₙNR3R4 in which R1, R2, R3 and R4 independently of one another represent a hydrogen atom or a C₁-C₆ alkyl group, advantageously a hydrogen atom or a methyl group, and n represents an integer between 1 and 6, advantageously n = 3.

4. Correction fluid according to any of claims 1 to 3, **characterized in that** the content of the dispersing and wetting agent b) of said fluid is between 0.01 and 10 wt.%, advantageously between 0.03 and 5 wt.%, in particular between 0.5 and 2 wt.%, based on the total weight of the correction fluid.

5. Correction fluid according to any of claims 1 to 4, **characterized in that** the organic solvent a) is selected from aliphatic hydrocarbons, in particular selected from the group of light naphtha alkylates, n-heptane, dimethylpentane, dimethylhexane, ethylpentane, methylhexane, methylcyclohexane, isooctane and mixtures thereof.

6. Correction fluid according to any of claims 1 to 5, **characterized in that** the content of the organic solvent a) of said fluid is between 25 and 75 wt.%, advantageously between 30 and 55 wt.%, based on the total weight of the correction fluid.

7. Correction fluid according to any of claims 1 to 6, **characterized in that** the opacifying agent c) is TiO₂.

8. Correction fluid according to any of claims 1 to 7, **characterized in that** the content of the opacifying agent c) of said fluid is between 40 and 60 wt.%, advantageously between 40 and 50 wt.%, based on the total weight of the correction fluid.

9. Correction fluid according to any of claims 1 to 8, **characterized in that** the resin d) is an acrylic resin, advantageously a vinyl acrylate copolymer, more advantageously a styrene acrylate copolymer.

10. Correction fluid according to any of claims 1 to 9, **characterized in that** the content of the resin d) of said fluid is between 5 and 15 wt.%, advantageously between 8 and 10 wt.%, based on the total weight of the correction fluid.

11. Correction fluid according to any of claims 1 to 10, **characterized in that** the additive e) is selected from optical brighteners, wetting agents, fillers, a tint-modifying pigment, plasticizers, surfactants, rheological additives and mixtures thereof, advantageously from optical brighteners and wetting agents.

12. Correction fluid according to any of claims 1 to 11, **characterized in that** the content of the additive e) of said fluid is between 0 and 5 wt.%, advantageously between 0 and 3 wt.%, based on the total weight of the correction fluid.

13. Correction fluid according to either of claims 11 or 12, **characterized in that** the content of optical brightener of said fluid is between 0.02 and 1.05 wt.%, advantageously between 0.5 and 1 wt.%, based on the total weight of the correction fluid.

14. Correction fluid according to either of claims 11 or 12, **characterized in that** the content of wetting agent of said fluid is between 1 and 3 wt.%, advantageously between 1.5 and 2 wt.%, based on the total weight of the correction fluid.

15. Device for applying a correction fluid, **characterized in that** said device comprises the correction fluid according to any of claims 1 to 14.
